# EUROPEAN PATENT APPLICATION

(11) **EP 3 677 343 A1**
(43) Date of publication of application: **08.07.2020**
(21) Application number: 18851517.5
(22) Date of filing: 23.07.2018
(51) Int. Cl.: B05C 1/02

(54) **SEALANT APPLICATION NOZZLE AND SEALANT APPLICATION DEVICE**

(30) Priority: 28.08.2017 JP 2017163367
(71) Applicant: Mitsubishi Heavy Industries, Ltd., Chiyoda-ku Tokyo 100-8332 (JP)
(72) Inventor: TAKAHAGI, Michinobu, Tokyo 108-8215 (JP); GOTO, Takuya, Tokyo 108-8215 (JP); IKADA, Akira, Tokyo 108-8215 (JP)
(74) Representative: Henkel & Partner mbB
(86) International application number: PCT/JP2018/027566
(87) International publication number: WO 2019/044269

(57) **Abstract**

The purpose of the present invention is to provide a sealant application nozzle and a sealant application device that can apply a suitable amount of sealant uniformly and with which rapid work can be performed. A sealant application nozzle (5) is provided with: a porous impregnation part (32) that can be impregnated with sealant and elastically deforms by contact with a chamfered part; a sealant supply path (33) that supplies sealant to the impregnation part (32); a base part (31) that surrounds the impregnation part (32) such that the tip part of the impregnation part (32) is exposed to the outside; and a retention space (34) that is formed between the base part (31) and the impregnation part (32) and retains the sealant.

## Description

### Technical Field

The present invention relates to a sealant application nozzle and a sealant application device.

### Background Art

In a case where a bolt is used to join an airframe outer plate of an aircraft, a countersunk bolt having a head portion which does not protrude from a surface of the outer plate is often used. In a case where the outer plate is joined using the countersunk bolt, in terms of improving waterproofness, preventing electrolytic corrosion, and ensuring airtightness, a sealant needs to be applied to a cone-shaped chamfered portion of a bolt hole formed in the outer plate. As a method of applying the sealant to the chamfered portion, a method is known in which a worker manually applies the sealant to the chamfered portion, or a method is known in which the worker applies the sealant to the chamfered portion by using a device such as an automatic riveter (AR).

For example, as the device for applying the sealant to the chamfered portion, there is a device disclosed in PTL 1. PTL 1 discloses an applicator for attaching the sealant to a countersink formed by a drill countersinking machine.

### Citation List

### Patent Literature

[PTL 1] Japanese Unexamined Patent Application Publication No. 63-130162

### Summary of Invention

### Technical Problem

Incidentally, when the sealant is applied to the chamfered portion by using the AR, it is conceivable that a metal nozzle is used for a tip of the applicator. A plurality of discharge holes for discharging the sealant are formed in a tip portion of the metal nozzle described above. After the sealant is quantitatively discharged from the discharge holes, the nozzle is brought into contact with the chamfered portion of the bolt hole formed in the outer plate. In this manner, the sealant is applied to the chamfered portion.

However, according to the nozzle described above, the nozzle is brought into contact with the chamfered portion in a state where the sealant is discharged from the discharge hole (that is, a state where the sealant protrudes as much as a predetermined amount from the discharge hole). Consequently, when the nozzle is brought into contact with the chamfered portion, application forms of the sealant differ between a region corresponding to the discharge hole and the other region. Specifically, whereas the sealant is applied to the region corresponding to the discharge hole so that the sealant is pressed by the nozzle, the sealant is applied to the other region except for the region corresponding to the discharge hole so that the sealant pressed by the nozzle stretches. In this way, the application forms of the sealant differ depending on the region. Accordingly, there is a possibility that the sealant cannot be uniformly applied to the chamfered portion.

In a case where a large amount of the sealant is discharged and applied to the chamfered portion so that the sealant protrudes from the chamfered portion, it is conceivable that the sealant can be uniformly applied to the chamfered portion. However, in this case, there is a problem in that work for cleaning the protruding sealant has to be carried out. In addition, if the protruding sealant adheres to a region other than the chamfered portion, sensors (for example, photoelectric sensors or image sensors) used in the AR detect an abnormality, thereby causing equipment to frequently stop. Consequently, there is a possibility that an operation rate of the equipment may be lowered.

In addition, the nozzle described above is made of metal, and does not deform. Accordingly, the sealant cannot be applied to the chamfered portions respectively having various shapes. For this reason, in a case where the sealant is applied to the chamfered portions respectively having different shapes, it is necessary to manually perform nozzle replacement. The equipment cannot be operated while the nozzle replacement is performed. Consequently, there is a possibility that the operation rate of the equipment may be lowered.

The present invention is made in view of the above-described circumstances, and aims to provide a sealant application nozzle and a sealant application device which can uniformly apply a suitable amount of sealant, and which can quickly carry out application work.

### Solution to Problem

In order to solve the above-described problems, a sealant application nozzle and a sealant application device according to the present invention adopt the following means. According to an aspect of the present invention, there is provided a sealant application nozzle including a porous infiltration portion into which a sealant is capable of infiltrating, and which comes into contact with an application target member so that a contact portion therebetween elastically deforms, and a sealant supply portion which supplies the sealant to the infiltration portion.

According to the above-described configuration, if the sealant is supplied from the sealant supply portion to the infiltration portion, the sealant infiltrates into the infiltration portion. The infiltration portion into which the sealant infiltrates comes into contact with the application target member. If the contact portion elastically deforms, the sealant oozes out of the contact portion as much as the amount corresponding to a deformation volume of the contact portion. Then, the oozing sealant is applied to the application target member.

In this way, only the oozing sealant is applied to the application target member in response to the deformation volume of the infiltration portion. Accordingly, the amount of the sealant to be applied to the application target member can be easily adjusted. In addition, the infiltration portion is porous. Accordingly, the sealant is discharged from the whole contact portion. Therefore, a suitable amount of the sealant can be uniformly applied to the application target member. For example, the porous infiltration portion can be configured to adopt a cloth material, a net material, or a sponge material.

In addition, the infiltration portion comes into contact with the application target member so that the contact portion elastically deforms. In this way, the contact portion deforms into a shape corresponding to the application target member. Accordingly, the infiltration portion can come into contact with the application target members respectively having various shapes. Therefore, the sealant can be applied to the application target members respectively having various shapes.

In addition, the sealant supplied to the sealant application nozzle infiltrates into the infiltration portion. Accordingly, the sealant is less likely to be discharged from the sealant application nozzle in a state where the sealant application nozzle is not in contact with the application target member. In this manner, the sealant can be prevented from scattering and dripping out of the sealant application nozzle. Therefore, the sealant can be prevented from being unintentionally discharged from the sealant application nozzle, and the sealant can be prevented from adhering to portions other than the application target member.

In the sealant application nozzle according to the aspect of the present invention, the infiltration portion may have a recess portion, and the recess portion may function as the sealant supply portion.

According to the above-described configuration, the infiltration portion has the recess portion, and the recess portion functions as the sealant supply portion. That is, the sealant supply portion is located inside the infiltration portion.

In this manner, compared to a case where the sealant supply portion is located outside the infiltration portion, a distance from a site farthest away from the sealant supply portion between the sealant supply portion and the infiltration portion is shortened. Therefore, the sealant can easily and uniformly infiltrate into the whole infiltration portion.

The sealant application nozzle according to the aspect of the present invention may further include a base portion which surrounds the infiltration portion so that the contact portion is exposed outward, and a storage portion which is formed between the base portion and the infiltration portion so as to store the sealant. The sealant supply portion may be capable of supplying the sealant to the storage portion. The infiltration portion and the storage portion may be adjacent to each other. The base portion may be elastically deformable around the contact portion.

According to the above-described configuration, the storage portion is formed between the base portion and the infiltration portion, and the infiltration portion and the storage portion are adjacent to each other. Accordingly, in a case where the sealant infiltrating into the infiltration portion decreases, the sealant stored in the storage portion permeates the infiltration portion. In this way, in a case where the sealant infiltrating into the infiltration portion decreases, the sealant can be supplied from the storage portion to the infiltration portion. In addition, according to the above-described configuration, the base portion is elastically deformable around the contact portion of the infiltration portion. In this manner, when the infiltration portion and the application target member come into contact with each other, the base portion also elastically deforms. If the base portion elastically deforms, the storage portion formed between the base portion and the infiltration portion shrinks. If the storage portion shrinks, the sealant stored in the storage portion is pushed out to the infiltration portion. Therefore, in a case where the base portion elastically deforms when the sealant is applied, the sealant can be more preferably supplied from the storage portion to the infiltration portion.

In this way, the sealant can be stored inside the sealant application nozzle, and the stored sealant can be supplied to the infiltration portion. Accordingly, even in a state where the sealant cannot be supplied to the sealant application nozzle from the outside, the sealant can be continuously applied.

In addition, the storage portion inside the sealant application nozzle stores the sealant in a state where the sealant does not infiltrate into the infiltration portion. In a case where the same amount of the sealant is stored, a volume of the storage portion in the state where the sealant does not infiltrate into the infiltration portion is smaller than that in a state where the sealant infiltrates into the infiltration portion. Therefore, a larger amount of the sealant can be stored inside the sealant application nozzle, compared to a case where the sealant is stored only in the state where the sealant infiltrates into the infiltration portion.

According to another aspect of the present invention, there is provided a sealant application device including any one of the sealant application nozzles, an arm portion whose tip has the sealant application nozzle, a drive unit which moves the arm portion to a desired position, and a sealant supply device which supplies a desired amount of the sealant to the sealant supply portion.

According to the above-described configuration, the sealant is applied to the application target member as much as the amount corresponding to the deformation volume of the infiltration portion. The deformation volume of the infiltration portion (that is, the amount of the sealant to be applied) is determined depending on a contact degree between the infiltration portion and the application target member. The contact degree between the infiltration portion and the application target member is determined by the drive unit which moves the arm portion having the sealant application nozzle. In this way, according to the above-described configuration, the amount of the sealant to be applied to the application target member is determined by the movement of the drive unit which is relatively easy to control. Accordingly, the amount of the sealant to be applied can be easily adjusted. Therefore, for example, in a case where the movement of the arm portion is constant, the amount of the sealant to be applied can also be constant.

### Advantageous Effects of Invention

According to the present invention, a suitable amount if the sealant can be uniformly applied, and application work can be quickly carried out.

### Brief Description of Drawings

Fig. 1 is a perspective view of a sealant application device according to an embodiment of the present invention.
Fig. 2 is a side view of the sealant application device illustrated in Fig. 1.
Fig. 3 is a plan view of the sealant application device illustrated in Fig. 1.
Fig. 4 is a sectional view of a sealant application nozzle according to the embodiment of the present invention.
Fig. 5A is a sectional view of the sealant application nozzle according to the embodiment of the present invention, and is a view illustrating a state before the sealant application nozzle and a chamfered portion come into contact with each other.
Fig. 5B is a sectional view of the sealant application nozzle according to the embodiment of the present invention, and is a view illustrating a state where the sealant application nozzle and the chamfered portion are in contact with each other.
Fig. 6 is a schematic configuration diagram illustrating an operation of the sealant application device according to the embodiment of the present invention.

### Description of Embodiments

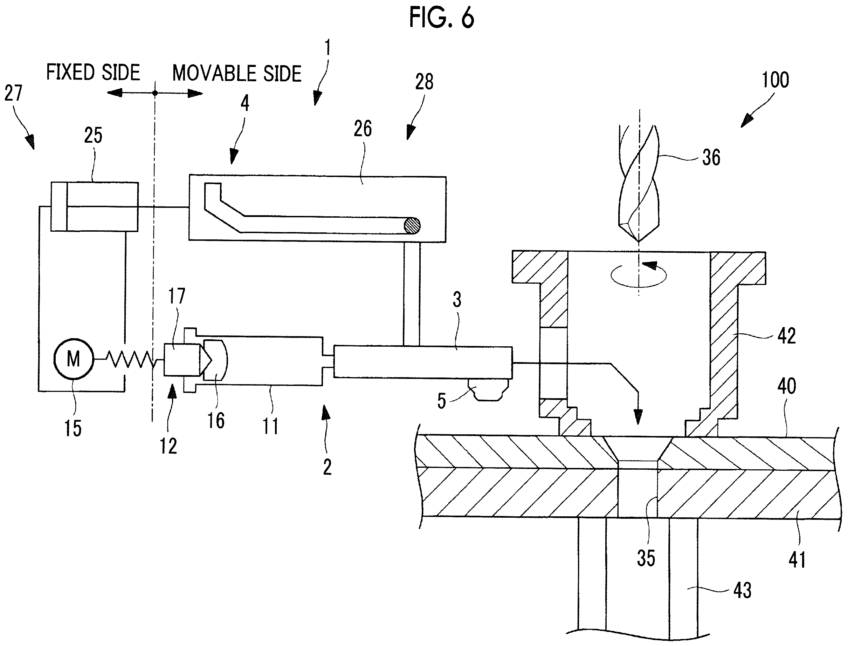

Hereinafter, an embodiment of a sealant application nozzle and a sealant application device according to the present invention will be described with reference to the drawings. A sealant application device 1 according to the present embodiment is applicable to an automatic riveter (AR) 100. The AR 100 (refer to Fig. 6) is a device used when an airframe outer plate of an aircraft is joined.

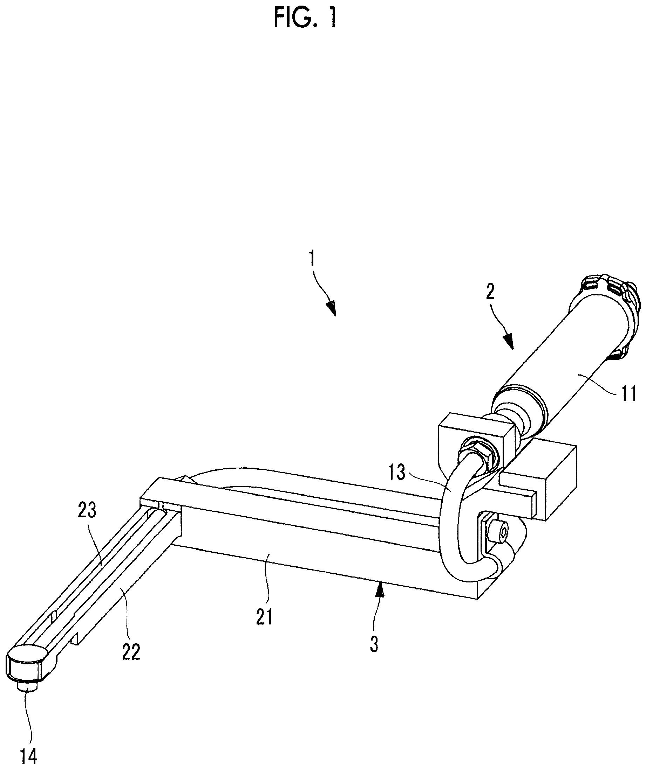

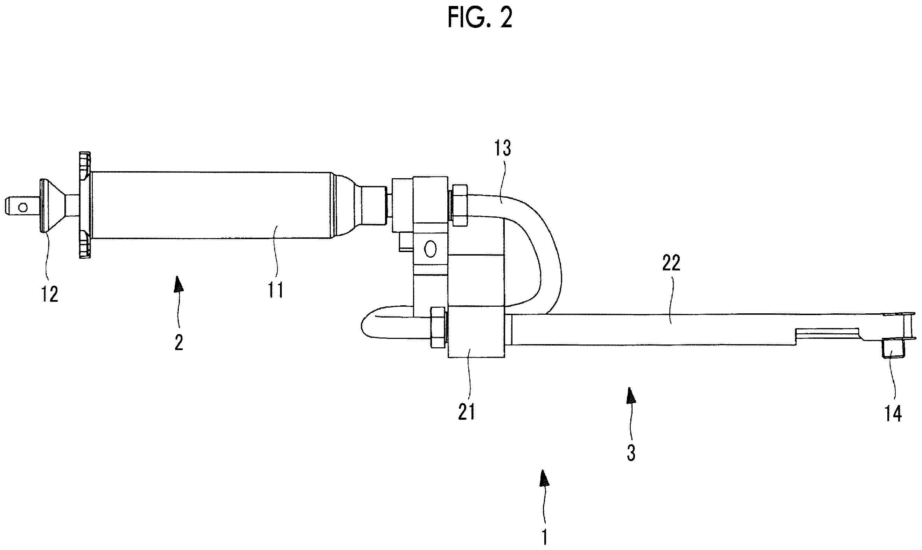

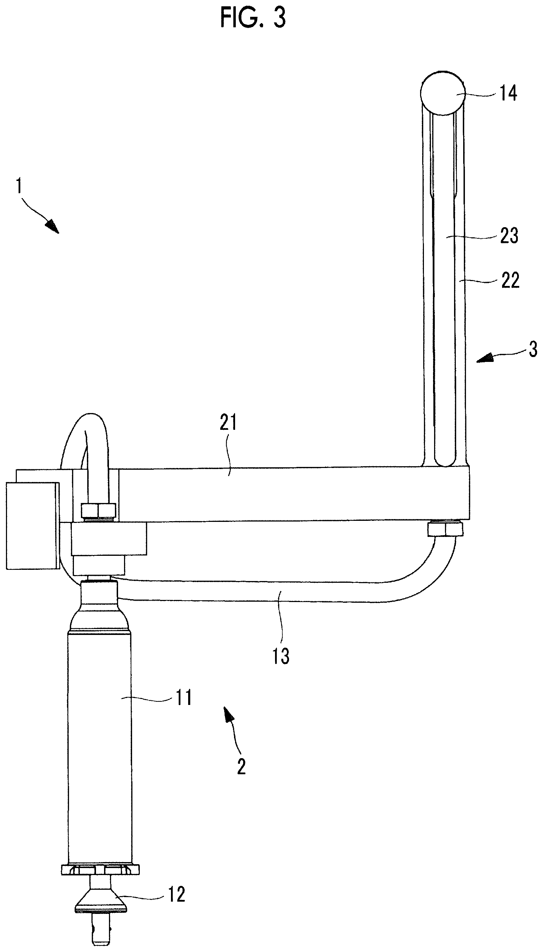

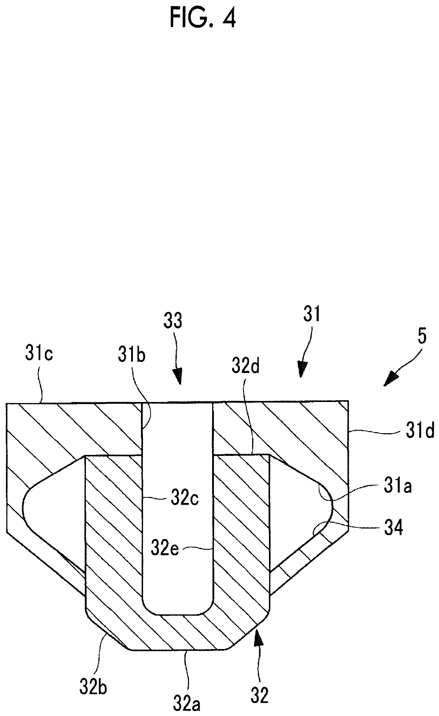

As illustrated in Figs. 1 to 3, the sealant application device 1 includes a sealant supply device 2, an arm portion 3 which holds a portion of the sealant supply device 2, a drive unit 4 (refer to Fig. 6) which moves the arm portion 3, and a sealant application nozzle 5 (refer to Fig. 4) to which a sealant is supplied from the sealant supply device 2.

The sealant supply device 2 has a filling portion 11 internally filled with the sealant, a piston 12 which pushes out the sealant from the filling portion 11, and a supply pipe 13 whose one end is connected to the filling portion 11 so that the sealant pushed out from the filling portion 11 circulates therein. As described above, the sealant supply device 2 configures a part of the sealant application device 1, but is configured to be attachable to and detachable from the sealant application device 1.

The filling portion 11 is a cylindrical member formed of a resin, and is located so that a cylindrical surface is perpendicular to a vertical surface. The supply pipe 13 is connected to one end of the filling portion 11, and the other end is closed by an extrusion portion 16 of the piston 12 (to be described later). In this way, a space is formed inside the filling portion 11, and the space is internally filled with the sealant.

As illustrated in Fig. 6, the piston 12 is driven by a servo motor 15. The piston 12 has an extrusion portion 16 located inside the filling portion 11 so as to slidably engage with an inner wall surface of the filling portion 11, and a pressing portion 17 which presses the extrusion portion 16 so that an internal space of the filling portion 11 is reduced by a driving force of the servo motor 15. The piston 12 is formed of a resin. The servo motor 15 and the pressing portion 17 are connected to each other so as to allow relative movement therebetween.

As illustrated in Figs. 1 to 3, the supply pipe 13 is a flexible pumping pipe body formed of a resin, and is located so as to extend along the arm portion 3. The supply pipe 13 connects the filling portion 11 and a nozzle attachment portion 14 to each other. In addition, the sealant circulates inside the supply pipe 13.

The arm portion 3 has a first arm portion 21 whose one end is connected to the drive unit 4, a second arm portion 22 extending from the other end of the first arm portion 21 in a direction substantially parallel to the filling portion 11, and a nozzle attachment portion 14 disposed in a tip of the second arm portion 22. The second arm portion 22 has a supply pipe accommodating groove 23 extending along the second arm portion 22. The supply pipe accommodating groove 23 is open upward, and the supply pipe 13 is located inside the supply pipe accommodating groove 23.

The nozzle attachment portion 14 extends in a predetermined direction from a stationary portion fixed to the second arm portion 22. In addition, the nozzle attachment portion 14 is a substantially bottomed cylindrical member which is open in a tip direction (free end direction), and has an opening formed on a side surface. The opening formed on the side surface and the other end of the supply pipe 13 are configured to be capable of communicating with each other. In addition, an inner peripheral surface of the tip portion of the nozzle attachment portion 14 has a male screw to which the sealant application nozzle 5 is screwed.

As illustrated in Fig. 6, the drive unit 4 has a horizontal cylinder portion 25 which moves the sealant application nozzle 5 attached to the nozzle attachment portion 14 in a horizontal direction, and a vertical cam 26 which moves the sealant application nozzle 5 in a vertical direction. The horizontal cylinder portion 25 is driven. In this manner, a movable portion 28 including the vertical cam 26 and the sealant supply device 2 is moved relative to the stationary portion 27 including the horizontal cylinder portion 25 and the servo motor 15.

As illustrated in Fig. 4, the sealant application nozzle 5 has a base portion 31, a substantially bottomed cylindrical infiltration portion 32 disposed inside the base portion 31, a sealant supply path (sealant supply portion) 33 formed on an inner peripheral side of the infiltration portion 32, and a storage space (storage portion) 34 formed on an outer peripheral side of the infiltration portion 32. In addition, an outer peripheral surface (specifically, an outer peripheral surface 31d of the base portion 31) of the sealant application nozzle 5 has a female screw screwed to an inner peripheral surface of the nozzle attachment portion 14.

The base portion 31 is a substantially cylindrical body having an elastic member (for example, rubber) formed of a resin, and is detachably attached to the nozzle attachment portion 14. The tip of the base portion 31 is formed in a tapered shape whose outer diameter gradually decreases toward the tip. In addition, an internal space 31a for locating the infiltration portion 32 and the storage space 34 is formed inside the base portion 31. In addition, in a plan view, a center of a terminal surface 31c of the base portion 31 (surface on a side where the nozzle attachment portion 14 is located) has a base portion internal flow path 31b penetrating from the terminal surface 31c to the internal space 31a. The base portion 31 may be formed of a member other than the rubber.

The infiltration portion 32 is a bottomed cylindrical body which is open in a terminal direction (direction in which the nozzle attachment portion 14 is positioned). That is, in a plan view, a center of a terminal surface 32d of the infiltration portion 32 has a recess portion 32c recessed in the tip direction. Then, the recess portion 32c configures an infiltration portion internal flow path 32e. The infiltration portion 32 is formed of an elastic porous member (for example, a sponge material), and the sealant can infiltrate into the infiltration portion 32. In addition, the infiltration portion 32 is located so that the tip portion protrudes as much as a predetermined length from the tip portion of the base portion 31. That is, the infiltration portion 32 is surrounded by the base portion 31 so as to expose the tip portion (contact portion which comes into contact with a chamfered portion 35a (to be described later)). An outer peripheral portion of the tip surface 32a of the infiltration portion 32 is an inclined surface 32b inclined close to a terminal side as the inclined surface 32b is directed toward an outer peripheral edge. In addition, the infiltration portion 32 is formed of a member having a smaller elastic modulus than the base portion 31. The infiltration portion 32 may be formed of a member other than the sponge material, and may be formed of a cloth material such as felt or a net-like member, for example.

A sealant supply path 33 is configured so that a base portion internal flow path 31b formed in the base portion 31 and an infiltration portion internal flow path 32e formed inside the infiltration portion 32 communicate with each other. In a state where the sealant application nozzle 5 is attached to the nozzle attachment portion 14, the sealant supply path 33 communicates with the supply pipe 13 via the nozzle attachment portion 14.

The storage space 34 is formed between the base portion 31 and the infiltration portion 32. The storage space 34 is an annular closed space formed along the outer peripheral surface of the infiltration portion 32. That is, the storage space 34 and the infiltration portion 32 are disposed adjacent to each other.

In addition, in addition to the sealant application device 1, the AR according to the present embodiment includes a drill 36 for forming a bolt hole 35 in a workpiece (application target member), a bolt inserting device (not illustrated) for inserting a bolt into the bolt hole 35, and a control unit (not illustrated) for controlling various devices included in the AR 100. In the present embodiment, an example will be described in which an outer plate of an aircraft is used as the workpiece. For example, the control unit is configured to include a central processing unit (CPU), a random access memory (RAM), a read only memory (ROM), and a computer-readable storage medium. Then, as an example, a series of processes for realizing various functions are stored in a storage medium as a form of a program, and the CPU reads the program from the RAM, and executes information processing/arithmetic processing, thereby realizing various functions. The program may adopt a form in which the program is installed in advance in the ROM or the other storage medium, a form in which the program is provided in a state where the program is stored in the computer-readable storage medium, or a form in which the program is distributed via wired or wireless communication means. The computer-readable storage medium includes a magnetic disk, a magneto-optical disk, a CD-ROM, a DVD-ROM, and a semiconductor memory.

Next, a method of joining the outer plate by using the AR 100 will be described with reference to Fig. 6. Specifically, a method of joining a first outer plate 40 and a second outer plate 41 to each other will be described. First, the first outer plate 40 and the second outer plate 41 are interposed and fixed between a clamp piece 42 and a lower anvil 43 so that no gap is formed between the plates. In a state where the first outer plate 40 and the second outer plate 41 are fixed to each other, the drill 36 forms the bolt hole 35 penetrating the first outer plate 40 and the second outer plate 41. The drill 36 according to the present embodiment adopts a drill for forming a bolt hole for a countersunk bolt. Accordingly, the chamfered portion 35a a having a conical shape is formed in the bolt hole 35. If the bolt hole 35 is formed, in terms of improving waterproofness, preventing electrolytic corrosion, and ensuring airtightness, the sealant is applied to the chamfered portion 35a of the bolt hole 35. The sealant according to the present embodiment is a semi-liquid seal material. The sealant is applied using the sealant application device 1. Specifically, the sealant application nozzle 5 is moved in the horizontal direction by the horizontal cylinder portion 25, and is moved in the vertical direction by the vertical cam 26. In this manner, the sealant application nozzle 5 is caused to pass through an opening formed on a side surface of the clamp piece 42, and is brought into contact with the chamfered portion 35a for approximately 1 second. Details of a method of applying the sealant to the chamfered portion 35a will be described later. If the sealant is applied to the chamfered portion 35a, the bolt inserting device inserts a bolt (not illustrated) into the bolt hole 35. The first outer plate 40 and the second outer plate 41 are joined to each other by inserting the bolt into the bolt hole 35.

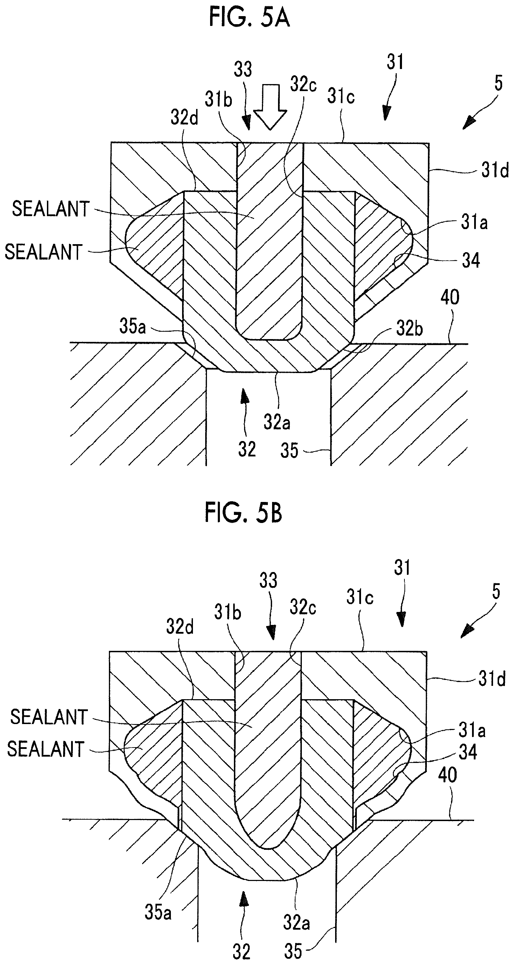

Next, a method of applying the sealant to the chamfered portion 35a by using the sealant application device 1 will be described with reference to Figs. 5A, 5B, and 6. First, as illustrated in Fig. 6, the servo motor 15 is driven at a standby position (for example, a position illustrated in Fig. 6) where the sealant application nozzle 5 is not moved, and the piston 12 is moved so as to reduce an internal space of the filling portion 11. If the piston 12 moves and the internal space of the filling portion 11 is reduced, the sealant filling the internal space of the filling portion 11 flows into the supply pipe 13. If the piston 12 further moves in the same direction, the sealant is caused to circulate inside the supply pipe 13 by a pressing force of the piston 12. The sealant circulating inside the supply pipe 13 reaches the sealant application nozzle 5 via the nozzle attachment portion 14.

The sealant reaching the sealant application nozzle 5 flows into the sealant supply path 33 as indicated by an outlined arrow in Fig. 5A. The sealant flowing into the sealant supply path 33 permeates the infiltration portion 32 from the inner peripheral surface of the infiltration portion 32 which faces the sealant supply path 33. The sealant permeating the infiltration portion 32 spreads over the infiltration portion 32. Accordingly, the whole infiltration portion 32 is in a state where the sealant infiltrates into the infiltration portion 32. If the sealant is supplied to the infiltration portion 32 in a state where the sealant infiltrates into the whole infiltration portion 32, the sealant overflows from the infiltration portion 32, and flows into the storage space 34 adjacent to the infiltration portion 32. That is, the sealant is supplied to the storage space 34 from the sealant supply path 33 via the infiltration portion 32. In this case, the sealant also overflows from the tip portion of the infiltration portion 32. However, the sealant application nozzle 5 is located at the standby position. Accordingly, the sealant overflowing from the tip portion does not adhere to the outer plate serving as the workpiece or other devices included in the AR 100. If the sealant is sufficiently stored inside the storage space 34, the servo motor 15 is stopped. As the timing for stopping the servo motor 15, the servo motor 15 may be stopped, based on an internal condition of the sealant application nozzle 5 by disposing a pressure detection device in the sealant application nozzle 5. Alternatively, the servo motor 15 may be stopped, if a predetermined amount of the sealant is extruded.

After the servo motor 15 is stopped, the sealant application nozzle 5 is brought into contact with the chamfered portion 35a of the bolt hole 35 by the drive unit 4 as described above. If the infiltration portion 32 into which the sealant infiltrates comes into contact with the chamfered portion 35a, the contact portion elastically deforms so as to correspond to a shape of the chamfered portion 35a as illustrated in Fig. 5B. In this case, the sealant oozes out of the contact portion as much as the amount corresponding to the deformation volume. Then, the oozing sealant is applied to the chamfered portion 35a. In this case, as illustrated in Fig. 5B, the tip portion of the base portion 31 also deforms. If the tip portion of the base portion 31 deforms, the storage space 34 formed between the base portion 31 and the infiltration portion 32 shrinks. If the storage space 34 shrinks, the sealant stored inside the storage space 34 is pushed out to the infiltration portion 32. Therefore, the sealant is supplied from the storage space 34 to the infiltration portion 32. In addition, even in a case where the base portion 31 does not elastically deform, when the sealant infiltrating into the infiltration portion 32 decreases, the sealant stored in the storage space 34 permeates the infiltration portion 32. Accordingly, the sealant is supplied from the storage space 34 to the infiltration portion 32.

If the sealant is applied, the drive unit 4 releases the contact between the sealant application nozzle 5 and the chamfered portion 35a. In this way, the sealant is applied to the chamfered portion 35a.

According to the present embodiment, the following advantageous effects are achieved. In the present embodiment, only the oozing sealant is applied to the chamfered portion 35a in response to the deformation volume of the infiltration portion 32. Accordingly, the amount of the sealant to be applied to the chamfered portion 35a can be easily adjusted. In addition, the infiltration portion 32 is porous. Accordingly, the sealant is discharged from the whole contact portion. Therefore, a suitable amount of the sealant can be uniformly applied to the chamfered portion 35a. In addition, the suitable amount of the sealant can be uniformly applied. Accordingly, when the sealant is applied, the sealant can be prevented from protruding from the chamfered portion 35a. In a case where the sealant protrudes, the protruding sealant has to be removed. However, according to the present embodiment, the sealant can be prevented from protruding. Therefore, work for removing the protruding sealant can be omitted. In this manner, the operation rate of the equipment can be improved. In addition, if the sealant protrudes from the chamfered portion 35a, the protruding sealant adheres to a region other than the chamfered portion 35a. Thus, sensors (for example, photoelectric sensors or image sensors) used in the AR 100 detect an abnormality, thereby causing the equipment to frequently stop. Consequently, there is a possibility that the operation rate of the equipment may be lowered. However, according to the present embodiment, this situation does not occur. Therefore, the operation rate of the equipment can be prevented from being lowered.

In addition, the infiltration portion 32 comes into contact with the chamfered portion 35a, thereby causing the contact portion to elastically deform. In this way, the contact portion deforms into a shape corresponding to the chamfered portion 35a. Accordingly, the infiltration portion 32 can be brought into contact with the chamfered portions 35a respectively having various shapes. Therefore, the sealant can be applied to the chamfered portion 35a respectively having various shapes. When the outer plate of the aircraft is joined, bolts having various shapes are used. If the shapes of the bolts are different from each other, the shapes of the bolt hole are also different from each other as a matter of course. However, according to the present embodiment, the sealant can be applied to the chamfered portion 35a respectively having various shapes. In this manner, the sealant can be applied to the bolt holes respectively having different shapes without replacing the sealant application nozzle 5. Therefore, the operation rate of the equipment can be improved.

In addition, the sealant supplied to the sealant application nozzle 5 is allowed to infiltrate into the infiltration portion 32. Accordingly, the sealant is less likely to be discharged from the sealant application nozzle 5, in a state where the sealant application nozzle 5 is not in contact with the chamfered portion 35a. In this manner, the sealant can be prevented from scattering and dripping out of the sealant application nozzle. 5. Therefore, the sealant can be prevented from being unintentionally discharged from the sealant application nozzle 5, and the sealant can be prevented from adhering to portions other than the chamfered portion 35a.

In addition, the recess portion 32c is formed in the infiltration portion 32, and the recess portion 32c functions as a portion of the sealant supply path 33. That is, a portion of the sealant supply path 33 is located inside the infiltration portion 32. In this manner, compared to a case where the sealant supply path 33 is located outside the infiltration portion 32, a distance from a site farthest away from the sealant supply path 33 between the sealant supply path 33 and the infiltration portion 32 is shortened. Therefore, the sealant can easily and uniformly infiltrate into the whole infiltration portion 32.

In addition, in a case where the sealant infiltrating into the infiltration portion 32 decreases, the sealant can be supplied from the storage space 34 to the infiltration portion 32. In addition, in a case where the base portion 31 elastically deforms, the storage space 34 is caused to shrink by the base portion 31. Therefore, the sealant can be more preferably supplied from the storage space 34 to the infiltration portion 32. In this manner, the sealant can be stored inside the sealant application nozzle 5, and the stored sealant can be supplied to the infiltration portion 32. Therefore, even in a state where the sealant cannot be supplied to the sealant application nozzle 5 from the outside, the sealant can be continuously applied to the respective chamfered portions of the plurality of bolt holes.

In addition, the sealant is applied to the chamfered portion 35a as much as the amount corresponding to the deformation volume of the infiltration portion 32. A contact degree between the infiltration portion 32 and the chamfered portion 35a is determined in accordance with the deformation volume (that is, the amount of the sealant to be applied) of the infiltration portion 32. The contact degree between the infiltration portion 32 and the chamfered portion 35a is determined by the drive unit 4 which moves the arm portion 3 having the sealant application nozzle 5. In this way, according to the present embodiment, the amount of sealant to be applied to the chamfered portion 35a is determined by the movement of the drive unit 4 which is likely to be controlled. Accordingly, the amount of the sealant to be applied can be easily adjusted. Therefore, for example, in a case where the movement of the arm portion 3 is constant, the amount of the sealant to be applied can also be constant.

In addition, the sealant application nozzle 5 is formed of an inexpensive resin, compared to metal. In this manner, even in a case where the sealant application nozzle 5 is disposable, an increase in raw material cost can be minimized. In addition, in a case where the sealant application nozzle 5 is not disposable, the sealant application nozzle 5 needs to be cleaned. However, the sealant application nozzle 5 is disposable. Thus, a cleaning process of the sealant application nozzle 5 can be reduced. Therefore, the operation rate of the equipment can be improved.

In addition, the inclined surface 32b is formed on the tip surface 32a of the infiltration portion 32. In this way, the infiltration portion 32 for applying the sealant is caused to have a shape corresponding to the shape of the chamfered portion 35a. Therefore, the sealant can be more preferably applied.

Without being limited to the invention according to the above-described embodiment, the present invention can be appropriately modified within the scope not departing from the gist of the invention. For example, in the present embodiment, an example has been described in which the sealant application nozzle 5 and the chamfered portion 35a are only brought into contact with each other when the sealant is applied. However, but the present invention is not limited thereto. For example, after the sealant application nozzle 5 and the chamfered portion 35a are brought into contact with each other when the sealant is applied, the whole sealant application nozzle 5 may be rotated around a direction axis along which the sealant supply path 33 extends. In addition, a vibration oscillator may be attached to the sealant application nozzle 5, and the sealant application nozzle 5 may be vibrated when the sealant application nozzle 5 and the chamfered portion 35a are in contact with each other. In addition, the sealant application nozzle 5 and the chamfered portion 35a may be brought into contact with each other multiple times. In addition, in the present embodiment, the base portion 31 is formed of the elastic body. However, the base portion 31 may be formed of metal. Reference Signs List

- 1:: sealant application device
- 2:: sealant supply device
- 3:: arm portion
- 4:: drive unit
- 5:: sealant application nozzle
- 11:: filling portion
- 12:: piston
- 13:: supply pipe
- 14:: nozzle attachment portion
- 15:: servo motor
- 16:: extrusion portion
- 17:: pressing portion
- 31:: base portion
- 32:: infiltration portion
- 32a:: tip surface
- 32b:: inclined surface
- 32c:: the recess portion
- 33:: sealant supply path (sealant supply portion)
- 34:: storage space (storage portion)
- 35:: bolt hole
- 35a:: chamfered portion
- 40:: first outer plate
- 41:: second outer plate
- 100:: AR

## Claims

1. A sealant application nozzle comprising:
a porous infiltration portion into which a sealant is capable of infiltrating, and which comes into contact with an application target member so that a contact portion therebetween elastically deforms; and
a sealant supply portion which supplies the sealant to the infiltration portion.

2. The sealant application nozzle according to Claim 1,
wherein the infiltration portion has a recess portion, and
wherein the recess portion serves as the sealant supply portion.

3. The sealant application nozzle according to Claim 1 or 2, further comprising:
a base portion which surrounds the infiltration portion so that the contact portion is exposed outward; and
a storage portion which is formed between the base portion and the infiltration portion so as to store the sealant,
wherein the sealant supply portion is capable of supplying the sealant to the storage portion,
wherein the infiltration portion and the storage portion are adjacent to each other, and
wherein the base portion is elastically deformable around the contact portion.

4. A sealant application device comprising:
the sealant application nozzle according to Claim 1 or 2;
an arm portion having a tip provided with the sealant application nozzle;
a drive unit which moves the arm portion to a desired position; and
a sealant supply device which supplies a desired amount of the sealant to the sealant supply portion.

## Amended claims

### Amended claims under Art. 19.1 PCT

1. [Amended]
A sealant application nozzle comprising:
a porous infiltration portion into which a sealant is capable of infiltrating, and which comes into contact with an application target member so that a contact portion therebetween elastically deforms;
a sealant supply portion which supplies the sealant to the infiltration portion;
a base portion which surrounds the infiltration portion so that the contact portion is exposed outward; and
a storage portion which is formed between the base portion and the infiltration portion so as to store the sealant.

2. The sealant application nozzle according to Claim 1,
wherein the infiltration portion has a recess portion, and
wherein the recess portion serves as the sealant supply portion.

3. [Amended]
The sealant application nozzle according to Claim 1 or 2,
wherein the sealant supply portion is capable of supplying the sealant to the storage portion,
wherein the infiltration portion and the storage portion are adjacent to each other, and
wherein the base portion is elastically deformable around the contact portion.

4. A sealant application device comprising:
the sealant application nozzle according to Claim 1 or 2;
an arm portion having a tip provided with the sealant application nozzle;
a drive unit which moves the arm portion to a desired position; and
a sealant supply device which supplies a desired amount of the sealant to the sealant supply portion.
